Europäisches Patentamt

European Patent Office

Office européen des brevets

(11) Veröffentlichungsnummer: **0 375 086**
**A2**

(12) **EUROPÄISCHE PATENTANMELDUNG**

(21) Anmeldenummer: **89250109.9**

(51) Int. Cl.5: **G06K 15/00**

(22) Anmeldetag: **07.12.89**

(30) Priorität: **19.12.88 DE 3843114**

(43) Veröffentlichungstag der Anmeldung:
**27.06.90 Patentblatt 90/26**

(84) Benannte Vertragsstaaten:
**AT BE CH DE FR GB IT LI NL**

(71) Anmelder: **MANNESMANN Aktiengesellschaft**
**Mannesmannufer 2**
**D-4000 Düsseldorf 1(DE)**

(72) Erfinder: **Michel, Manfred, Dipl.-Ing.**
**Otterngasse 13**
**D-7901 Bernstadt(DE)**

(74) Vertreter: **Presting, Hans-Joachim, Dipl.-Ing.**
**et al**
**Meissner & Meissner Patentanwaltsbüro**
**Herbertstrasse 22**
**D-1000 Berlin 33(DE)**

(54) **Verfahren zum Programmieren und zur Auswahl von Funktionen eines Computer-Peripheriegerätes, insbesondere eines Druckers.**

(57) Bei einem Verfahren zum Programmieren und zur Auswahl von Funktionen eines Computer-Peripheriegerätes werden über eine Eingabetastatur des Computers Steuer-Sequenzen on-line über die Schnittstellenschaltung in einen RAM-Bereich der Steuerschaltung des Peripheriegerätes gegeben und aufgerufen.

Um das Peripheriegerät an beliebige Systeme zu adaptieren, für den Benutzer die Befehlseingabe am Computer wesentlich zu vereinfachen und die Einsatzmöglichkeit des Peripheriegerätes zu erhöhen wird vorgeschlagen, daß nach Einstecken einer mit einem zusätzlichen RAM-Baustein (11) bestückten, auswechselbaren Kassette (9) in das Peripheriegerät (5) und nach Laden einer auf das Computer-Betriebssystem ausgelegten System-Software in den menügesteuerten Computer (1) ein vom Benutzer gewünschter Code (21) jweils als codierte Steuer-Sequenz bzw. Steuerzeichen über ein Menü (25) in den zusätzlichen RAM-Baustein (11) resident abgespeichert wird, wobei die vom Benutzer frei gewählten Codes (21) einer endlichen Anzahl von im Peripheriegerät (5) vorgegebenen Funktionsarten (22) zugeordnet werden.

Fig.1

# Verfahren zum Programmieren und zur Auswahl von Funktionen eines Computer-Peripheriegerätes, insbesondere eines Druckers

Die Erfindung betrifft ein Verfahren zum Programmieren und zur Auswahl von Funktionen eines Computer-Peripheriegerätes, insbesondere eines Druckers, bei dem über eine Eingabetastatur des Computers Steuer-Sequenzen on-line über die Schnittstellenschaltung in einen RAM-Bereich der Steuerschaltung des Peripheriegerätes gegeben und aufgerufen werden, sowie eine spezielle Kassette in dem RAM-Bereich.

Computer-Peripheriegeräte, z.B. Drucker, können entweder über ihr Bedienfeld oder über ihre Schnittstelle mit Hilfe von Steuercodes programmiert werden.

Die Programmierung über das Bedienfeld erfolgt über Festspeicher (ROM-Bausteine), bei denen keinerlei Änderungen zu erwarten sind. In diesen Fällen werden Steuerbefehle, wie z.B. "online" "Druckqualität", "Testprogramm", "Menue", "Papiereinzug" u.dgl., fest abgespeichert und beliebig über die Tasten des Bedienfeldes ausgewählt und aufgerufen.

Die Programmierung über die Schnittstelle (eines Druckers) erfolgt über in die Eingabetastatur eines Computers eingegebene Steuercodes. Diese Steuercodes werden vom angeschlossenen Computer zur sofortigen Verarbeitung an den Drucker gesendet. Der Drucker führt diese Befehle im Rahmen seiner absolut verfügbaren Funktionsanzahl aus. Solche Steuer codes werden z.B. in Ein-Byte-Steuercodes ("BS" für back space; "CR" für carriage Return; "LF" für line feed; "SO" für shift out) und in Steuercodes mit vorangestelltem "ESC" (d.h. Escape-Sequenzen) eingeteilt.

Die in den Computern verwendete System-Software (z.B. MS-DOS oder Unix) gestattet jedoch nicht immer, besondere bzw. alle Druckerfunktionen in Verbindung mit dem jeweiligen Computer-System auszunutzen. Die Vielzahl der auf dem Markt befindlichen Computer mit unterschiedlichem Betriebssystem bildet jedoch ein großes Hindernis für eine volle Ausschöpfung der Druckerfunktionen.

Da die Auswahl der Funktionen des Peripheriegerätes über das Bedienungsfeld erheblich beschränkt ist und die Auswahl über die Programmierung der Schnittstelle von der System-Software des Computers abhängt, stehen dem Benutzer eines Druckers in der Regel nur ein Teil der physikalisch möglichen Peripheriegerät-Funktionen zur Verfügung.

Der Erfindung liegt die Aufgabe zugrunde, das Peripheriegerät an beliebige Systeme zu adaptieren, für den Benutzer die Befehlseingabe am Computer wesentlich zu vereinfachen und die Einsatzmöglichkeit des Peripheriegerätes zu erhöhen.

Die gestellte Aufgabe wird erfindungsgemäß dadurch gelöst, daß nach Einstecken einer mit einem zusätzlichen RAM-Baustein bestückten, auswechselbaren Kassette in das Peripheriegerät und nach Laden einer auf das Computer-Betriebssystem ausgelegten System-Software in den menuegesteuerten Computer ein vom Benutzer gewünschter Code jeweils als codierte Steuer-Sequenz bzw. Steuerzeichen über ein Menue in dem zusätzlichen RAM-Baustein resident abgespeichert wird, wobei die vom Benutzer freigewählten Codes einer endlichen Anzahl von im Peripheriegerät vorgegebenen Funktionsarten zugeordnet werden. Diese Lehre gestattet den Zugriff auf den RAM-Bereich eines Druckers von einem Computer aus, wie z.B. von einem Personal-Computer aus. Der Zugriff gewährt dem Anwender folgende Möglichkeiten: Der Bediener kann eigene Steuerzeichen oder eigens gewählte Zeichen nach seinen Wünschen definieren, wobei die eingesetzte Hard- und Software zu berücksichtigen ist. Als besonderer Vorteil ist anzusehen, daß bisher nicht order wenig genutzte Druckerfunktionen mit den bereits vorhandenen Anwenderprogrammen aufgerufen und bearbeitet werden können. Diese Vorteil sind selbstverständlich durch die endliche Anzahl von physikalisch fest vorgegebenen Eintragungen am Drucker beschränkt. Die Erfindung stellt somit einen offenen Sequenz-Decoder dar, wodurch individuell festgelegte Systeme jetzt auch vom Drucker verstanden werden können, unabhängig von Hardware oder Software des Computer-Betriebssystems oder von Anwenderprogrammen.

Eine Ausgestaltung der Erfindung besteht darin, daß der vom Benutzer gewünschte Code aus ASCII-Zeichen bzw. -Zeichenfolgen bis zu einer Maximallänge von 10 Bytes gewählt wird. Eine solche Festlegung vereinfacht die Anwendung des Grundgedankens erheblich, da solche Zeichen als in der Computer-Industrie verbreitet eingeführt gelten können.

In Anknüpfung an die vorstehend erwähnten Verhältnisse wird außerdem vorgeschlagen, daß in dem zusätzlichen RAM-Baustein der den ASCII-Zeichen bzw. der -Zeichenfolge entsprechende Hexadezimal-Wert eingespeichert wird.

Es ist außerdem vorteilhaft, daß die Funktionen des Peripheriegerätes in einer festgelegten Reihenfolge programmiert werden. Dadurch ergibt sich der Vorteil eines geordneten Programmablaufs.

In Weiterbildung der Erfindung wird vorgeschlagen, daß im Peripheriegerät stets vorgesehene ANSI-Codes nicht durch gewünschte Codes ersetzt werden, sondern daß die gewünschten Codes

3          EP 0 375 086 A2          4

in vorhandene Steuer-Sequenzen umgewandelt werden. Eine vom Rechner aus gesendete ANSI-Frequenz soll nicht gefiltert, sondern in dieser Form wirksam werden.

Ein weiterer Vorschlag besteht darin, daß die momentan gültige Konfiguration der System-Software, die in dem RAM-Baustein gespeichert ist, durch das Peripheriegerät abrufbar ist.

Eine andere Verbesserung sieht vor, daß beim netzseitigen Einschalten des Peripheriegerätes vorrangig über die Konfiguration der System-Software die Kassette mit dem RAM-Baustein selektiert wird.

Das beschriebene Verfahren läßt sich aufgrund einer auswechselbaren Kassette für die elektronische Steuerschaltung eines Computer-Peripheriegerätes, insbesondere eines Druckers, deren Steckteil in den auf der elektronischen Leiterplatte vorgesehenen Stecksockel für die Anschlußstiftkontakte vorgesehen ist, durchführen. Nach der weiteren Ausgestaltung der Erfindung ist eine solche Kassette dahingehend ausgebildet, daß auf einer Kassetten-Grundplatte ein gepuffertes RAM-Bauteil zusammen mit einer Batterie angeordnet ist und daß der RAM-Bauteil mit einem von einem Computer initial gesendeten Programm dauerhaft ladbar ist.

In der Zeichnung sind Ausführungsbeispiele dargestellt, anhand deren sowohl das Verfahren als auch die Kassette beschrieben werden. Es zeigen:

Fig. 1 eine Kombination eines Computers mit einem Terminal und einer Tastatur sowie einem Peripheriegerät (Drucker),

Fig. 2 ein auf dem Terminal sichtbares Menue mit Bildschirmmaske nach Laden des Programms,

Fig. 3 den Beginn einer Liste der vom Rechner an das Peripheriegerät zu sendenden Codierungen,

Fig. 4A bis 4D eine Kassette mit dem RAM-Bauteil,

Fig. 5 eine Liste der Funktionsarten eines Druckers,

Fig. 6 eine vervollständigte Liste von Druckerfunktionen und

Fig. 7 eine Fortsetzung der Liste von Fig. 6.

Der Computer 1 ist in üblicher Form mit einer Tastatur 2 über eine Datenleitung 3 und mit einem Terminal 4 verbunden. An den Computer 1 ist ferner ein Peripheriegerät 5 über ein Datenkabel 6 angeschlossen.

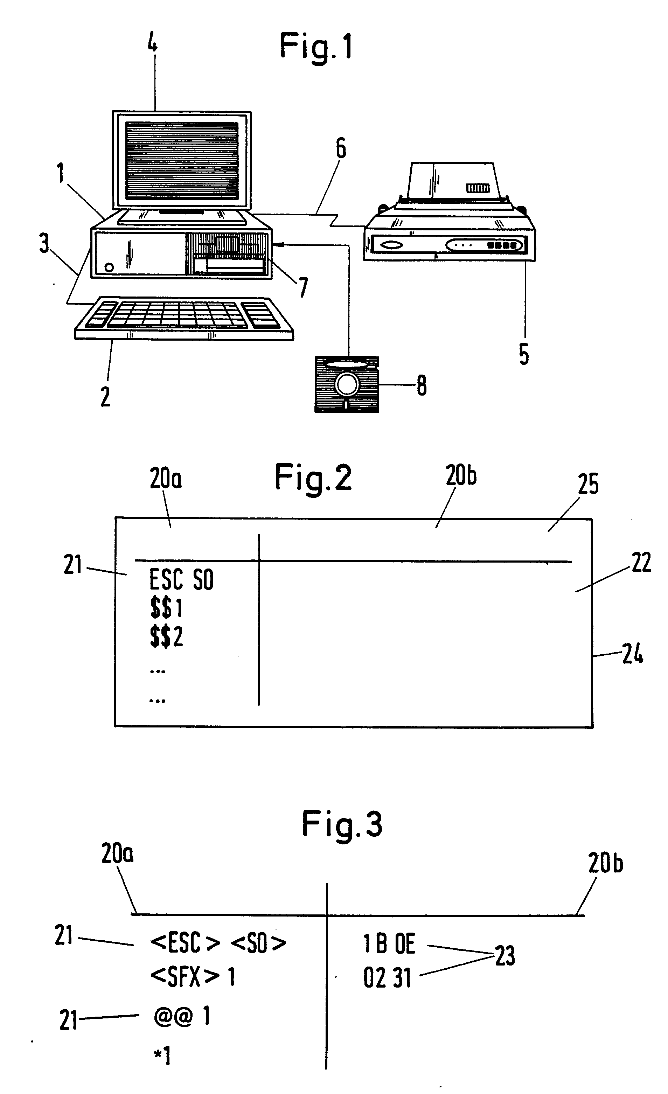

Für den Fall, daß der Computer 1 aus einem Personal-Computer besteht, weist er ein Diskettenlaufwerk 7 für Disketten 8 auf (Fig. 1).

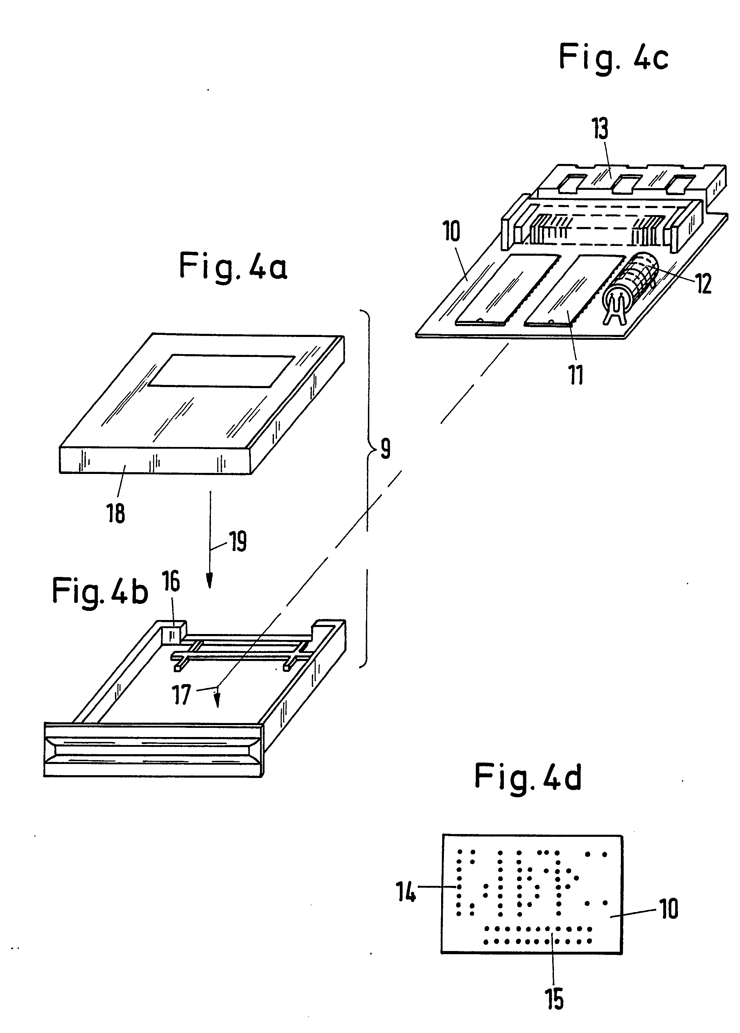

Das Peripheriegerät 5 besitzt auf seiner Leiterplatte einen (nicht näher gezeigten) Stecksockel für eine auswechselbare Kassette 9 (Fig. 4A bis 4D. Eine solche Kassette 9 besteht aus einer Kassettengrundplatte .10, auf der ein speicherresidenter RAM-Baustein 11 zusammen mit einer Batterie 12 angeordnet ist. Ein Stecksockel 13 dient zum Einstecken der gesamten Kassette 9 auf der erwähnten Leiterplatte des Peripheriegerätes 5. Gemäß Fig. 4D sind die Kontaktstifte 14 für den RAM-Baustein 11 sichtbar sowie Kontakte 15 für den Stecksockel 13. Die Grundplatte 10 wird in das Gehäuse 16 in Pfeilrichtung 17 eingebaut und ein Deckel 18 verschließt in Pfeilrichtung 19 die auswechselbare Kassette 9.

Nach Einbau der Kassette 9 in das Peripheriegerät 5 wird die Diskette 8, auf der sich ein noch zu beschreibendes Programm befindet, in den Computer 1 geladen. Das Programm entspricht der auf den Computer 1 bezogenen hard- und software-abhängigen System-Software eines menuegesteuerten Computers 1. Dieses Programm erzeugt eine Bildschirmmaske 24 gemäß Fig. 2, wobei sich in einer linken Spalte 20a (Eingabeseite) ein gewünschter Code 21 und in einer rechten Spalte 20b in Klarschrift die Funktionsarten 22 des Peripheriegerätes 5 befinden. Im Augenblick des ersten Ladens des Disketten-Inhalts der Diskette 8 ist die linke Spalte 20a noch leer.

Wie Fig. 3 zeigt, werden alle ASCII-Zeichen und -Zeichenfolgen bis zu einer Länge von 10 Bytes zugelassen, wobei die Codes 21 in der Bildschirmmaske 24 des Computers 1 in spitzen Klammern dargestellt werden. In den RAM-Baustein 11 wird der entsprechende Hexadezimal-Wert 23 übertragen. Die Bildschirmmaske 24 enthält ein Menue 25 mit den Funktionsarten 22 des Peripheriegerätes 5.

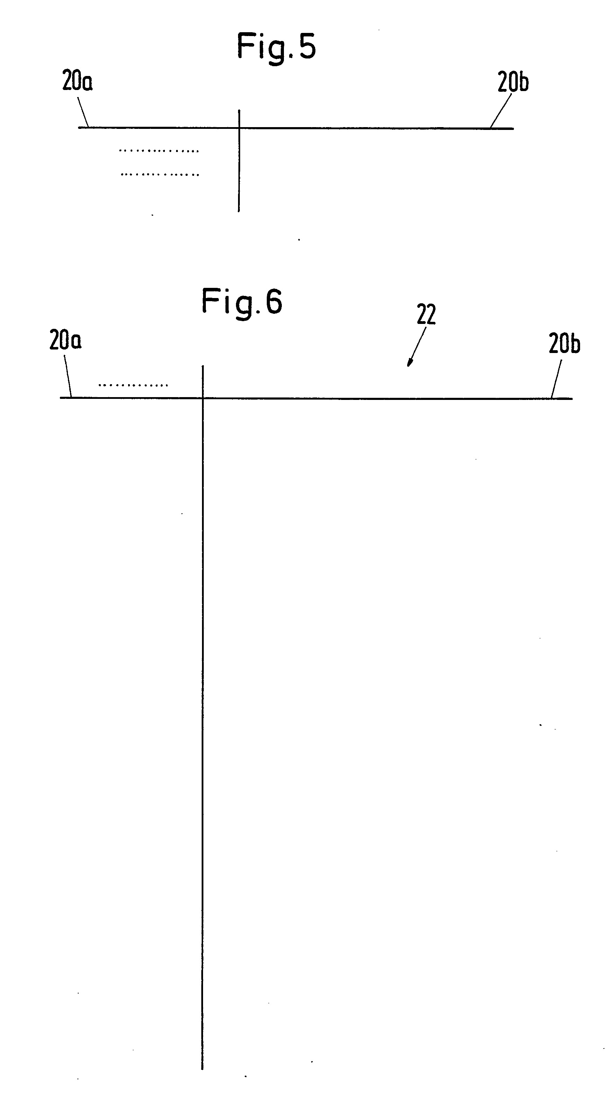

Als Beispiel ist in Fig. 5 von einer Konvertierungs-Software eines Druckers ausgegangen. Die festgelegte Reihenfolge (z.B. Breitschrift 5 cpi - Sheet-Feeder-Schacht 1) entspricht der Steuerung des Druckers. Daraufhin werden die Codes 21 fest zugeordnet.

An erster Stelle (Fig. 5) steht hier die Breitschrift 5 cpi. Die Software soll nun feststellen, welche Code-Folge in der Linken Spalte 20a an erster Stelle eingetragen ist. Entsprechend der in Fig. 3 vorgenommenen Eingabe spitze Klammer nach links ESC spitze Klammer nach rechts, spitze Klammer nach links SO spitze Klammer nach rechts bewirkt diese Code-Folge nun immer Breitschrift.

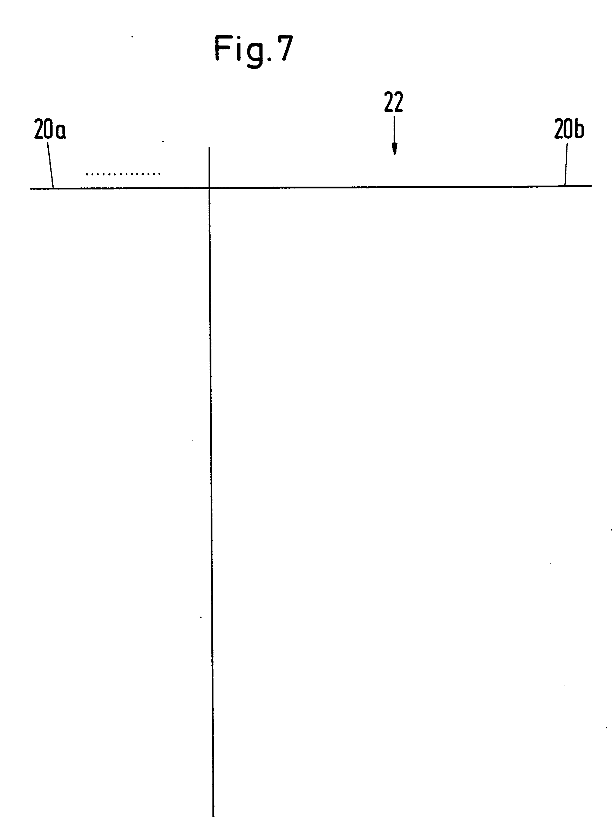

Eine feste Folge der Funktionsarten 22 ist in Fig. 6 dargestellt und wird in Fig. 7 fortgesetzt und beendet.

Die Codes 21 in Fig. 7 sind ausschließlich aus dem ANSI-Bereich (ANSI = American Nationales Standard Institute) hergeleitet.

In Fig. 3 findet man an zweiter Stelle den Sheet-Feeder-Schacht 1, der stets mit spitze Klammer links SFX spitze Klammer rechts 1 anwählbar ist. Da in Fig. 2 an fünfter Stelle die Schriftart

3

"Proportionalschrift" festgelegt ist, hat die Konvertierungs-Software auf der linken Spalte 20a die Eintragung (Code 21) ebenfalls an der fünften Stelle zu berücksichtigen.

**Ansprüche**

1. Verfahren zum Programmieren und zur Auswahl von Funktionen eines Computer-Peripheriegerätes, insbesondere eines Druckers, bei dem über eine Eingabetastatur des Computers Steuer-Sequenzen on-line über die Schnittstellenschaltung in einen RAM-Bereich der Steuerschaltung des Peripheriegerätes gegeben und aufgerufen werden, dadurch gekennzeichnet, daß nach Einstecken einer mit einem zusätzlichen RAM-Baustein (11) bestückten, auswechselbaren Kassette (9) in das Peripheriegerät (5) und nach Laden einer auf das Computer-Betriebssystem ausgelegten System-Software in den menuegesteuerten Computer (1) ein vom Benutzer gewünschter Code (21) jeweils als codierte Steuer-Sequenz bzw. Steuerzeichen über ein Menue (25) in dem zusätzlichen RAM-Baustein (11) resident abgespeichert wird, wobei die vom Benutzer frei gewählten Codes (21) einer endlichen Anzahl von im Peripheriegerät (5) vorgegebenen Funktionsarten (22) zugeordnet werden.

2. Verfahren nach Anspruch 1, dadurch gekennzeichnet, daß der vom Benutzer gewünschte Code (21) aus ASCII-Zeichen bzw. -Zeichenfolgen bis zu einer Maximallänge von 10 Bytes gewählt wird.

3. Verfahren nach den Ansprüchen 1 und 2, dadurch gekennzeichnet, daß in dem zusätzlichen RAM-Baustein (11) der den ASCII-Zeichen bzw. der -Zeichenfolge entsprechende Hexadezimal-Wert (23) eingespeichert wird.

4. Verfahren nach den Ansprüchen 1 bis 3, dadurch gekennzeichnet, daß die Funktionen des Peripheriegerätes (5) in einer festgelegten Reihenfolge programmiert werden.

5. Verfahren nach den Ansprüchen 1 bis 4, dadurch gekennzeichnet, daß im Peripheriegerät (5) stets vorgesehene ANSI-Codes nicht durch gewünschte Codes ersetzt werden, sondern daß die gewünschten Codes in vorhandene Steuer-Sequenzen umgewandelt werden.

6. Verfahren nach einem oder mehreren der Ansprüche 1 bis 5, dadurch gekennzeichnet, daß die momentan gültige Konfiguration der System-Software, die im RAM-Baustein (11) gepeichert ist, durch das Peripheriegerät (5) abrufbar ist.

7. Verfahren nach den Ansprüchen 1 bis 6, dadurch gekennzeichnet, daß beim netzseitigen Einschalten des Peripheriegerätes (5) vorrangig über die Konfiguration der System-Software die Kassette (9) mit dem RAM-Baustein (11) selektiert wird.

8. Auswechselbare Kassette für die elektronische Steuerschaltung eines Computer-Peripheriegerätes, insbesondere eines Druckers, deren Steckteil in den auf der elektronischen Leiterplatte vorgesehenen Stecksockel für die Anschlußstiftkontakte vorgesehen ist, dadurch gekennzeichnet, daß auf einer Kassetten-Grundplatte (10) ein gepuffertes RAM-Bauteil (11) zusammen mit einer Batterie (12) angeordnet ist und daß der RAM-Bauteil (11) mit einem von einem Computer (1) initial gesendeten Programm dauerhaft ladbar ist.

# Fig.1

# Fig.2

# Fig.3

Fig. 4a

Fig. 4b

Fig. 4c

Fig. 4d

## Fig.5

20a                                                          20b

## Fig.6

22

20a                                                          20b

# Fig.7

20a

22

20b